# EUROPÄISCHE PATENTSCHRIFT

(11) **EP 3 188 950 B1**
(45) Veröffentlichungstag und Bekanntmachung des Hinweises auf die Patenterteilung: **24.04.2019**
(21) Anmeldenummer: 15750429.1
(22) Anmeldetag: 14.08.2015
(51) Int. Cl.: B62D 15/02, G08G 1/16

(54) **SPURHALTEASSISTENT**
LANE-KEEPING ASSISTANT
ASSISTANT DE SUIVI DE VOIE

(30) Priorität: 04.09.2014 DE 102014217694
(43) Veröffentlichungstag der Anmeldung: 12.07.2017
(73) Patentinhaber: Volkswagen Aktiengesellschaft, 38440 Wolfsburg (DE)
(72) Erfinder: BUSCH, Sebastian, 38114 Braunschweig (DE); WONKE, Michael, 38102 Braunschweig (DE); EIGEL, Thomas, 13585 Berlin (DE)
(86) Internationale Anmeldenummer: PCT/EP2015/068721
(87) Internationale Veröffentlichungsnummer: WO 2016/034389

(56) Entgegenhaltungen:
- EP-A1- 1 927 499
- DE-A1-102012 208 712
- JP-A- 2000 062 554
- JP-A- 2006 298 294
- US-A1- 2006 111 842
- US-A1- 2013 238 192
- US-A1- 2013 321 172

## Beschreibung

Die Erfindung betrifft ein Verfahren zur Regelung der Spurhaltung eines Kraftfahrzeugs gemäß dem Oberbegriff des Anspruchs 1 sowie einen entsprechenden Spurhalteassistenten gemäß dem Oberbegriff des Anspruchs 4.

Zur Unterstützung des Fahrers sowie zur Erhöhung der Verkehrssicherheit sind heutige Kraftfahrzeuge üblicherweise mit diversen Assistenzsystemen ausgestattet. Eines dieser Assistenzsysteme ist das Spurhalteassistenzsystem, welches den Fahrer des Fahrzeugs dabei unterstützt, das Fahrzeug in der Fahrspur zu halten. Voraussetzungen zur Unterstützung sind dabei, dass der Fahrer Kontakt zum Lenkrad hat, der Fahrtrichtungsanzeiger nicht aktiv ist und die ausgeübte Lenkbewegung des Fahrers nicht auf einen Spurwechsel hindeutet.

Der Spurhalteassistent ist in diversen Ausgestaltungen im Einsatz, wobei in seiner einfachsten Form der Spurhalteassistent bei einer Annäherung des Fahrzeugs an eine Fahrbahnmarkierung einer Fahrspur eine Warnung an den Fahrer ausgibt, wenn ein Fahrspurwechsel nicht erkennbar ist. Bei Serpentinenfahrten in gebirgiger Umgebung kann nun das System den Fahrer durch fortlaufende Warnungen belästigen, da oftmals zur Befahrung einer Serpentine auf die Nachbarspur gewechselt werden muss, ohne dass der Fahrer einen Blinker setzt.

In einer komplexeren Ausgestaltung kann der Spurhalteassistent bei der Annäherung des Fahrzeugs an die Fahrmarkierung einer Fahrspur die Lenkung mit einem Lenkmoment beaufschlagen, welches das Fahrzeug wieder zurück in die Fahrspur führt. Das aufgebrachte Lenkmoment muss dabei vom Fahrer übersteuerbar sein, da dieser beispielsweise einen Fahrspurwechsel beabsichtigen kann ohne den Fahrtrichtungsanzeiger gesetzt zu haben.

Ferner kann der Spurhaltassistent mit einer Beobachtung der Fahreraktivität gekoppelt sein. So wird in der Druckschrift DE 10 2008 038 816 A1 ein System beschrieben, bei welchem der Spurhalteassistent automatisch aktiviert wird, wenn der Fahrer unaufmerksam ist und eine Fahrsituation erkannt wird, bei welcher ein Verlassen der Fahrspur bei gefährlichem Gegenverkehr droht. Allerdings kann eine drohende Kollision in diesem Fall nur dann vermieden werden, wenn eine Fahrspurmarkierung vorhanden bzw. erkennbar ist.

Ebenso wird in der Druckschrift DE 10 2009 041 187 A1 ein Spurhalteassistent beschrieben, der die Blickrichtung des Fahrers erfasst. Erkennt die Blickrichtungserfassung, dass der Fahrer bewusst die Fahrbahnmarkierung überfahren möchte, so wird nicht in den Lenkvorgang des Fahrers eingegriffen. Es kann also als Funktion der Fahrerblickrichtung die Spurhaltefunktion des Spurhalteassistent aktiviert werden oder nicht.

Dennoch erfolgt oftmals ein Abschalten der Assistenzfunktion des Spurhalteassistenten seitens des Fahrers, da dessen Eingriffe oftmals als störend empfunden werden.

Die Druckschrift DE 10 2010 063 792 A1 betrifft ein Verfahren zum automatischen und dynamischen Auswählen von Fahrerassistenzfunktionen eines Assistenzsystems, wobei jede Fahrerassistenzfunktion einen aktivierten oder deaktivierten Zustand annehmen kann. Die Bestimmung der fahrsituativen Situation des Fahrzeugs erfolgt über eine geeignete Umfeldsensorik und die Auswahl der Fahrerassistenzfunktionen erfolgt als Funktion der ermittelten fahrsituativen Situation des Fahrzeugs unabhängig vom Fahrer. Wird bei der Ermittlung der fahrsituativen Fahrzeugsituation keine Fahrbahnmarkierung erkannt, so wird die Spurhalteassistenzfunktion deaktiviert, was unter Umständen in einer Baustellensituation zu einer kritischen Situation bei Gegenverkehr führen kann.

Aus dem nächstliegenden Stand der Technik US 2013 238 192 A1 ist ein Spurhalteassistent bekannt, mit dem ein Abdriften eines Fahrzeugs auf die Gegenfahrspur und Gegenverkehr detektiert wird. Sobald beide Bedingungen erfüllt werden und der Fahrer keine Aktivität zeigt, erfolgt der Eingriff des Spurhalteassistenten. Als Regelungsparameter für den Lenkeingriff des Spurhalteassistenten dient der entgegenkommende Gegenverkehr.

Die Druckschrift DE 10 2012 208 712 A1 offenbart ein Verfahren zum Vermeiden oder Abmildern einer Kollision eines ersten Fahrzeugs mit einem Hindernis, insbesondere einem entgegenkommenden zweiten Fahrzeugs, vergleichbar einem Notausweichassistenten. Für den Fall, dass das zweite Fahrzeug auf die Fahrspur des ersten Fahrzeugs gelangt, wird das erste Fahrzeug innerhalb der Fahrspur des ersten Fahrzeugs an den äußeren Randbereich der Fahrspur des ersten Fahrzeugs und im Zweifelsfall auch darüber hinaus gesteuert. Ein Lenkeingriff erfolgt gerade in dem Maße, dass dem zweiten Fahrzeug, das sich auf der Fahrspur des ersten Fahrzeugs befindet, sicher ausgewichen werden kann.

Der Erfindung liegt daher die Aufgabe zugrunde, die Spurhalteassistenzfunktion so auszugestalten, dass die fahrerseitige Akzeptanz gesteigert wird.

Diese Aufgabe wird durch ein Verfahren mit den Merkmalen des Anspruchs 1 sowie durch eine Vorrichtung mit den Merkmalen des Anspruchs 5 gelöst. Bevorzugte Ausgestaltungen der Erfindung sind Gegenstand der Unteransprüche.

Das erfindungsgemäße Verfahren zur Regelung der Spurhaltung eines Kraftfahrzeugs, wobei das Kraftfahrzeug einen Spurhalteassistenten mit zumindest den Zuständen inaktiv und aktiv aufweist, der zum Halten des Fahrzeugs in der eigenen Fahrspur dient, weist die folgenden Schritte auf:
- Überprüfen, ob ein Abdriften des Fahrzeugs auf die Gegenspur stattfindet,
- Überprüfen, ob auf der Gegenspur Gegenverkehr herrscht,
- Aktivieren des Spurhalteassistenten, falls ein Abdriften des Fahrzeugs stattfindet und Gegenverkehr herrscht,
- Regeln des Spurhalteassistenten auf das entgegenkommende Objekt durch aktiven Lenkeingriff, wobei das entgegenkommende Fahrzeug als Spurbegrenzung der Eigenfahrspur interpretiert wird.

Vorzugsweise ist der Spurhalteassistent zu Beginn des Verfahrens inaktiv. Dabei bedeutet inaktiv, dass der Spurhalteassistent sozusagen im Hintergrund mitläuft, aber keine Eingriffe in der Fahrzeugführung ausübt oder Warnungen ausgibt.

Der Spurhalteassistent sucht zudem nach Fahrspurmarkierungen in der Umgebung des Fahrzeugs. Bei Vorhandensein von Fahrspurmarkierungen wird das Überfahren der aufgefundenen Fahrspurmarkierungen durch den Spurhalteassistent zugelassen. Damit kann eine Verhinderung der Kollision auch dann stattfinden, wenn sich das Eigenfahrzeug bereits teilweise auf der Gegenspur befindet.

Weiter bevorzugt findet eine Überwachung der Aktivität des Fahrers statt und eine Aktivierung des Spurhalteassistenten erfolgt nur dann, wenn die Fahreraktivitätsüberwachung einen unaufmerksamen Fahrer feststellt.

Der erfindungsgemäße Spurhalteassistent zum Halten eines Kraftfahrzeugs in der eigenen Fahrspur, welcher zur Durchführung des im Vorangegangenen erläuterten Verfahrens eingerichtet und ausgelegt ist, wobei der Spurhalteassistent zumindest die Zustände aktiv und inaktiv aufweist, der Zustand aktiv einen Lenkeingriff ermöglicht und der Zustand inaktiv keine Lenkeingriffe zulässt, umfasst
- eine Einrichtung zur Überwachung des Umfeldes des Kraftfahrzeugs,
- eine Einrichtung zum Auswerten der von der Umfeldüberwachung ermittelten Daten, und
- eine Einrichtung zum Ausführen der Spurhaltefunktion durch zumindest Eingriffe in die Lenkung, und
- eine Einrichtung zur Bestimmung entgegenkommender Fahrzeuge auf der Gegenspur.

Vorzugsweise weist der Spurhalteassistent eine Einrichtung zur Bestimmung einer Begrenzung der eigenen Fahrspur anhand des entgegenkommenden Fahrzeugs auf.

Weiter bevorzugt weist der Spurhalteassistent eine Einrichtung zur Bestimmung der Fahreraktivität auf.

Sollte daher der Fahrer unaufmerksam sein und auf die Gegenspur abdriften, so kann das ungefährlich sein, weil gerade kein Gegenverkehr kommt. Es kann jedoch sehr gefährlich sein, wenn ein entgegenkommendes Fahrzeug dem Eigenfahrzeug auf der Gegenspur nahe kommt und das Fahrzeug auf die Gegenspur abdriftet. Im ersten Fall bleibt der Spurthalteassistent inaktiv. Im zweiten Fall wird der Spurhalteassistent aktiviert und es wird auf das entgegenkommende Objekt geregelt, indem ein Überfahren der Fahrspurmarkierung erlaubt wird und nur "so viel" gelenkt wird, dass eine Kollision mit dem entgegenkommenden Fahrzeug vermieden wird.

Mit dem erfindungsgemäßen Verfahren gehen zwei Vorteile einher. Zum Einen regelt das Spurhaltesystem auch in dem Fall, in dem keine Fahrspurmarkierung vorhanden ist. Zum Anderen wird nicht stärker in die fahrerische Verantwortung des Fahrzeugführers eingegriffen als notwendig ist, um eine Kollision zu vermeiden.

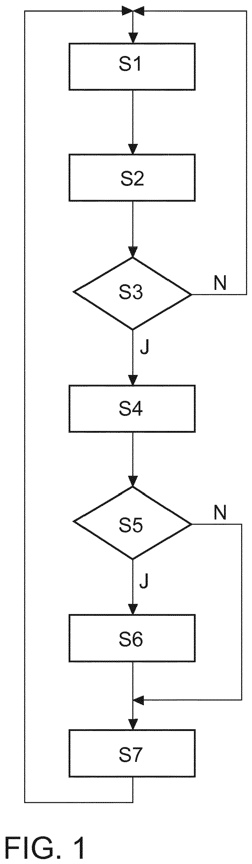

Eine bevorzugte Ausführungsform der Erfindung wird nachfolgend anhand der einzigen Zeichnung erläutert. Dabei zeigt
- Fig.1: ein Ablaufdiagramm des Verfahrens.

Fig. 1 zeigt ein Beispiel des Verfahrens in Diagrammform. Ausgangspunkt des Verfahrens ist der erste Schritt S1, in dem der Zustand des Spurhalteassistenten inaktiv ist. Dabei kann der Zustand "inaktiv" quasi als Voreinstellung vorliegen oder der Spurhalteassistent wird aus dem deaktiven Zustand oder dem aktiven Zustand in den inaktiven Zustand versetzt.

Zur Begriffsklärung wird unterschieden zwischen dem Zustand "deaktiviert", in dem der Spurhalteassistent völlig ausgeschaltet ist und Eingriffe in das Fahrgeschehen nicht möglich sind, dem Zustand "inaktiv", in dem der Spurhalteassistent im Hintergrund ohne Eingriff in das Fahrgeschehen mitläuft, und dem Zustand "aktiv", in dem der Spurhalteassistent aktiv ist und Eingriffe in das Fahrgeschehen ausführen kann.

Im zweiten Schritt S2 wird mittels einer geeigneten Umfeldsensorik des Spurhalteassistenten untersucht, ob das Fahrzeug auf seiner Fahrspur bleibt oder ob ein Abdriften des Fahrzeugs in Richtung Gegenspur feststellbar ist. Dies kann gekoppelt sein mit einer Überwachung der Aufmerksamkeit des Fahrers.

Wird im Schritt S2 festgestellt, dass das Fahrzeug auf die Gegenspur abdriftet, wobei das Abdriften des Fahrzeugs auf die Gegenspur mit dem Merkmal des unaufmerksamen Fahrers im Sinne einer logischen UND-Verknüpfung verknüpft werden kann, so wird im Schritt S3 mit der Umfeldsensorik des Spurhalteassistenten, d.h. des Fahrzeugs, untersucht, ob auf der Gegenspur bzw. Nachbarspur gerade Gegenverkehr herrscht und ein Fahrzeug entgegenkommt, so dass es zu einer Kollision kommen könnte.

Kommt kein Gegenverkehr und ist folglich die Verkehrssituation entspannt, d.h. im Moment ungefährlich, so geht das Verfahren im Zweig "N" zurück zum Schritt S1. Mit anderen Worten, es erfolgt keine Aktivierung des Spurhalteassistenten in den Zustand "aktiv" und es erfolgt kein Eingriff in die Hoheit des Fahrers.

Wird im Schritt S3 Gegenverkehr auf der Gegenspur erkannt und ist die Verkehrssituation folglich gefährlich, so geht das Verfahren im "J"-Zweig über zu Schritt S4, in dem die Spurhaltefunktion des Spurhalteassistenten aktiviert wird. Mit anderen Worten, der Spurhalteassistent wird in den Zustand "aktiv" versetzt.

Im darauffolgenden Schritt S5 wird mittels der Umgebungssensorik untersucht, ob die Fahrbahn eine Fahrspurmarkierung aufweist, auf die üblicherweise der Spurhalteassistent regelt. Ist eine Fahrspurmarkierung vorhanden, d.h. erkennbar, so geht das Verfahren im "J"-Zweig in den Schritt S6 über, in dem ein Überfahren der Fahrbahnmarkierung erlaubt wird. Mit anderen Worten, die Standardregelung des Spurhalteassistenten auf die Fahrspurmarkierung wird außer Kraft gesetzt und der Spurhalteassistent kann die Fahrspurmarkierung überfahren. Anschließend geht das Verfahren über in den Schritt S7.

Wird im Schritt S5 festgestellt, dass keine Fahrbahnmarkierung erkannt wird und daraus gefolgert, dass keine Fahrbahnmarkierung vorhanden ist, so geht das Verfahren im "N"-Zweig über in den Schritt S7.

Im Schritt S7 regelt der Spurhaltassistent das Fahrzeug durch einen Lenkeingriff insoweit, dass eine Kollision mit dem entgegenkommenden Fahrzeug vermieden wird. Es wird das entgegenkommende Fahrzeug anstelle einer Fahrspurmarkierung als Spurbegrenzung zur Regelung interpretiert und "nur" so viel gelenkt, dass eine Kollision vermieden wird. Nachdem eine Kollision mit dem entgegenkommenden Fahrzeug durch die Aktivierung des Spurhaltassistenten und der Verwendung des entgegenkommenden Fahrzeugs als Spurbegrenzung abgewendet ist, geht das Verfahren wieder zurück zu Schritt S1 und der Spurhalteassistent wird wieder in den inaktiven Zustand versetzt, so dass eine erneute Regelung auf ein entgegenkommendes Fahrzeug im Fall eines Abdriftens von der Fahrspur möglich ist.

### Bezugszeichenliste

- S1: inaktiver Zustand
- S2: Abdrift und gegebenenfalls Fahreraktivität prüfen
- S3: Gegenverkehr prüfen
- S4: Spurhalteassistent aktivieren
- S5: Fahrbahnmarkierung prüfen
- S6: Regelung Fahrspurmarkierung ausschalten
- S7: Eingriff Spurhalteassistent

## Patentansprüche

1. Verfahren zur Regelung der Spurhaltung eines Kraftfahrzeugs, wobei das Kraftfahrzeug einen Spurhalteassistenten mit zumindest den Zuständen inaktiv und aktiv aufweist, der zum Halten des Fahrzeugs in der eigenen Fahrspur dient,
umfassend folgende Schritte:
Überprüfen, ob ein Abdriften des Fahrzeugs auf die Gegenspur stattfindet (S2), Überprüfen, ob auf der Gegenspur Gegenverkehr herrscht (S3),
Aktivieren des Spurhalteassistenten (S4), falls ein Abdriften des Fahrzeugs stattfindet und Gegenverkehr herrscht,
Regeln des Spurhalteassistenten auf das entgegenkommende Objekt durch aktiven Lenkeingriff (S7), wobei das entgegenkommende Fahrzeug als Spurbegrenzung der Eigenfahrspur interpretiert wird
**dadurch gekennzeichnet, dass** der Spurhalteassistent nach Fahrspurmarkierungen in der Umgebung des Fahrzeugs sucht (S5) und bei Vorhandensein von Fahrspurmarkierungen das Überfahren der aufgefundenen Fahrspurmarkierungen durch den Spurhalteassistent zulässig ist (S6).

2. Verfahren nach Anspruch 1, **dadurch gekennzeichnet, dass** der Spurhalteassistent zu Beginn des Verfahrens inaktiv ist (S1).

3. Verfahren nach einem der vorangegangenen Ansprüche, **dadurch gekennzeichnet, dass** eine Überwachung der Aktivität des Fahrers stattfindet (S2) und eine Aktivierung des Spurhalteassistenten nur dann erfolgt, wenn die Fahreraktivitätsüberwachung einen unaufmerksamen Fahrer feststellt.

4. Spurhalteassistent zum Halten eines Kraftfahrzeugs in der eigenen Fahrspur, welcher zur Durchführung des Verfahrens nach einem der vorangegangenen Ansprüche eingerichtet und ausgelegt ist, mit einer Einrichtung zur Überwachung des Umfeldes des Kraftfahrzeugs, einer Einrichtung zum Auswerten der von der Umfeldüberwachung ermittelten Daten und einer Einrichtung zum Ausführen der Spurhaltefunktion durch zumindest Eingriffe in die Lenkung,
**dadurch gekennzeichnet, dass**
der Spurhalteassistent zumindest die Zustände aktiv und inaktiv aufweist, wobei der Zustand aktiv einen Lenkeingriff ermöglicht und der Zustand inaktiv keine Lenkeingriffe zulässt, und der Spurhalteassistent eine Einrichtung zur Bestimmung entgegenkommender Fahrzeuge auf der Gegenspur aufweist.

5. Spurhalteassistent nach Anspruch 4, **dadurch gekennzeichnet, dass** der Spurhalteassistent eine Einrichtung zur Bestimmung einer Begrenzung der eigenen Fahrspur anhand des entgegenkommenden Fahrzeugs aufweist.

6. Spurhalteassistent nach einem der Ansprüche 4 oder 5, **dadurch gekennzeichnet, dass** der Spurhalteassistent eine Einrichtung zur Bestimmung der Fahreraktivität aufweist.

## Claims

1. Method for controlling the lane keeping of a motor vehicle, wherein the motor vehicle has a lane keeping assistant having at least the states inactive and active that is used for keeping the vehicle in its own lane,
comprising the following steps:
checking whether the vehicle is drifting off onto the opposite carriageway (S2),
checking whether there is oncoming traffic on the opposite carriageway (S3),
activating the lane keeping assistant (S4) if the vehicle is drifting off and there is oncoming traffic,
controlling the lane keeping assistant with respect to the oncoming object by activating steering intervention (S7), the oncoming vehicle being interpreted as a lane boundary for the ego vehicle lane,
**characterized in that** the lane keeping assistant looks for lane markings in the surroundings of the vehicle (S5) and, if lane markings are present, then it is allowable for the lane markings found to be crossed by the lane keeping assistant (S6).

2. Method according to Claim 1, **characterized in that** the lane keeping assistant is inactive at the beginning of the method (S1).

3. Method according to one of the preceding claims, **characterized in that** the activity of the driver is monitored (S2) and the lane keeping assistant is activated only if the driver activity monitoring finds an inattentive driver.

4. Lane keeping assistant for keeping a motor vehicle in its own lane that is set up and designed for performing the method according to one of the preceding claims, having a device for monitoring the environment of the motor vehicle, a device for evaluating the data ascertained by the environment monitoring and a device for performing the lane keeping function by means of at least interventions in the steering,
**characterized in that**
the lane keeping assistant has at least the states active and inactive, wherein the active state allows a steering intervention and the inactive state does not allow steering interventions, and the lane keeping assistant has a device for determining oncoming vehicles on the opposite carriageway.

5. Lane keeping assistant according to Claim 4, **characterized in that** the lane keeping assistant has a device for determining a boundary for the ego vehicle lane on the basis of the oncoming vehicle.

6. Lane keeping assistant according to either of Claims 4 and 5, **characterized in that** the lane keeping assistant has a device for determining the driver activity.

## Revendications

1. Procédé pour commander le suivi de voie d'un véhicule automobile, dans lequel le véhicule automobile comporte un assistant de suivi de voie présentant au moins les états inactif et actif, qui sert à maintenir le véhicule sur sa propre voie, comprenant les étapes suivantes :
vérifier s'il se produit une dérive du véhicule vers la voie opposée (S2),
vérifier s'il y a du trafic venant en sens inverse sur la voie opposée (S3),
activer l'assistant de suivi de voie (S4) s'il se produit une dérive du véhicule vers la voie opposée et s'il y a du trafic venant en sens inverse,
commander l'assistant de suivi de voie vers l'objet venant en sens inverse par une action de braquage (S7), dans lequel le véhicule venant en sens inverse est interprété comme étant une délimitation de voie de la voie propre du véhicule,
**caractérisé en ce que** l'assistant de suivi de voie recherche des marquages de voie dans l'environnement du véhicule (S5) et, si des marquages de voie sont présents, le franchissement des marquages de voie trouvés est autorisé (S6) par l'assistant de suivi de voie.

2. Procédé selon la revendication 1, **caractérisé en ce que** l'assistant de suivi de voie est inactif (S1) au début du procédé.

3. Procédé selon l'une des revendications précédentes, **caractérisé en ce qu'**une surveillance de l'activité du conducteur est effectuée (S2) et **en ce qu'**une activation de l'assistant de suivi de voie n'est effectuée que si la surveillance de l'activité du conducteur détermine que le conducteur n'est pas vigilant.

4. Assistant de suivi de voie pour le maintien d'un véhicule automobile sur sa propre voie, qui est conçu et réalisé pour la mise en oeuvre du procédé selon l'une des revendications précédentes, comportant un dispositif de surveillance de l'environnement du véhicule à moteur, un dispositif d'évaluation des données déterminées par la surveillance de l'environnement et un dispositif destiné à mettre en oeuvre la fonction de suivi de voie par au moins une action de braquage,
**caractérisé en ce que** l'assistant de suivi de voie présente au moins les états actif et inactif, dans lequel l'état actif autorise une action de braquage et l'état inactif n'autorise pas d'action de braquage, et l'assistant de suivi de voie comporte un dispositif destiné à déterminer des véhicules venant en sens inverse sur la voie opposée.

5. Assistant de suivi de voie selon la revendication 4, **caractérisé en ce que** l'assistant de suivi de voie comporte un dispositif pour déterminer une délimitation de sa propre voie sur la base du véhicule arrivant en sens inverse.

6. Assistant de suivi de voie selon l'une des revendications 4 ou 5, **caractérisé en ce que** l'assistant de suivi de voie comporte un dispositif pour déterminer l'activité du conducteur.
